# EUROPÄISCHE PATENTANMELDUNG

(11) **EP 1 378 642 A1**
(43) Veröffentlichungstag der Anmeldung: **07.01.2004**
(21) Anmeldenummer: 03012575.1
(22) Anmeldetag: 03.06.2003
(51) Int. Cl.: F02B 47/08, F02B 47/00, F01N 3/05, F01N 3/22

(54) **Verfahren zum Betrieb eines Verbrennungsmotors mit Sekundärluftzuführung**

(30) Priorität: 04.07.2002 DE 10230014
(71) Anmelder: Bayerische Motoren Werke Aktiengesellschaft, 80809 München (DE)
(72) Erfinder: Dittrich, Rudolf, 93083 Obertraubling (DE)

(57) **Zusammenfassung**

Bei einem Verfahren zum Betrieb eines Ottomotors mit Sekundärluftzuführung in einen von einem Brennraum fortführenden Abgastrakt wird während und/oder kurz nach einem Starten des Motors zusätzliche Luft in den Abgastrakt eingeblasen, um dort Nachreaktionen zu begünstigen. Weiterhin wird während und/oder nach einem Abstellen des Motors Luft in den Abgastrakt eingeblasen, um verbliebene Rückstände abzuführen. Mit diesem Verfahren sowie einem entsprechend gestalteten Motor lassen sich Schadstoffemissionen während und in der Zeit kurz nach einem Motorstart verringern.

## Beschreibung

Die Erfindung bezieht sich auf ein Verfahren zum Betrieb eines Verbrennungsmotors, insbesondere Ottomotors, mit Sekundärluftzuführung in einen von einem Brennraum fortführenden Abgastrakt, bei dem während und/oder kurz nach einem Starten des Motors zusätzliche Luft in den Abgastrakt eingeblasen wird, um dort Nachreaktionen zu begünstigen. Weiterhin bezieht sich die Erfindung auf einen entsprechenden Verbrennungsmotor. Sie eignet sich insbesondere für Personenkraftwagen, kann jedoch auch bei anderen Fahrzeugentypen und anderen Motoren als Ottomotoren eingesetzt werden.

Im Zuge der wachsenden Ansprüche an ein möglichst schadstoffarmes Emissionsverhalten von Kraftfahrzeugen sind immer detaitreichere Maßnahmen erforderlich, um die zum Teil gesetzlich vorgeschriebenen Grenzwerte einzuhalten. Entsprechend sind aus dem Stand der Technik vielfältige Maßnahmen bekannt, um während des Betriebs, aber auch bereits beim Starten des Motors günstige Abgaseigenschaften zu erzielen.

Technisch problematisch ist insbesondere die Zeit während und unmittelbar nach dem Starten des Motors aufgrund des instationären Betriebsverhaltens. Übliche Testzyklen zeigen, daß bereits während der ersten Sekunden des Motorlaufs der größte Teil der Schadstoffe des gesamten Test-Zyklus produziert werden.

Zwar lassen sich Schadstoffe durch geeignete Katalysatoren vermindern. Jedoch müssen diese Katalysatoren zumeist erst auf eine bestimmte Konvertierungstemperatur aufgeheizt werden, bevor eine wirksame Schadstoffminderung erzielt wird.

Während der ersten Sekunden wird der Motor daher zunächst derart betrieben, daß zum einen möglichst wenig Roh-Emissionen erzeugt werden, zum anderen jedoch eine hohe Abgastemperatur entsteht, um den Katalysator auf seine Konvertierungstemperatur zu bringen.

Es hat sich in diesem Zusammenhang als vorteifhaft erwiesen, während dieser Phase den Motor mit einem fetten Gemisch zu betreiben, also einem Gemisch, dessen Luft/Kraftstoffverhältnis λ kleiner als 1 ist. Zusätzlich wird dabei Sekundäriuft in den Abgastrakt eingeblasen, um dort Nachreaktionen zu begünstigen, welche zu einem schnellen Aufheizen des Katalysators führen.

Entsprechende Verfahren der eingangs genannten Art sind allgemein bekannt. Bei den derzeit bekannten Verfahren wird jedoch der Zustand des Motors beim Starten nicht ausreichend berücksichtigt. Vielmehr wird eine Sekundärluftzuführung unabhängig davon vorgenommen, ob sich der Motor im kalten oder aber in einem warmen Zustand befindet. Hieraus resultieren Schwankungen beim Emissionsverhalten in den ersten Sekunden nach dem Motorstart.

Davon ausgehend liegt der Erfindung die Aufgabe zugrunde, das Emissionsverhalten während und in der Zeit kurz nach einem Motorstart weiter zu verbessern.

Hierzu wird vorgeschlagen, bei einem Verfahren der eingangs genannten Art während und/oder unmittelbar nach einem Abstellen des Motors Luft in den Abgastrakt einzublasen, um verbliebene Rückstände abzuführen.

Dies hat den Vorteil, daß im Abgastrakt befindliche Restemissionen aus dem Motorbetrieb, insbesondere verbliebene Abgase und teilverbrannter Kraftstoff, beim Abstellen des Motors abgeführt werden und bei einem erneuten Starten die Emissionen während des Motorwarmlaufs nicht mehr beeinträchtigen.

Die Restemissionen können außerdem über einen noch heißen, konvertierungsfähigen Katalysator geführt und dadurch entgiftet werden.

Darüber hinaus läßt sich durch das Einblasen von Luft in den Abgastrakt beim Abstellen des Motors an den katalytischen Flächen ein definierter Zustand reproduzierbar einstellen, wodurch das Ansprechverhalten des Katalysators für erneute Motorstarts vergleichmäßigt und damit besser beherrschbar wird.

Durch eine Beaufschlagung des Katalysators mit Sauerstoff wird dieser regeneriert und somit schneller arbeitsfähig. Dies ist insbesondere in solchen Fällen günstig, in denen der Motor während des Warmlaufs mit einem fetten Gemisch betrieben wird.

Die Dauer der Luftzuführung während und/oder nach dem Abstellen des Motors bzw. die in dieser Phase zugeführte Luftmenge kann entweder fest vorgegeben werden, oder aber in Abhängigkeit verschiedener Parameter erfolgen.

Nach einer vorteilhaften Ausgestaltung des erfindungsgemäßen Verfahrens erfolgt die Luftzuführung während und/oder nach dem Abstellen des Motors in Abhängigkeit der Konvertierungstemperatur eines im Abgastrakt angeordneten Katalysators. Damit kann ein nach dem Abschalten des Motors im Katalysator vorhandenes Reinigungspotential optimal ausgenutzt werden.

Die Temperatur läßt sich beispielsweise durch ein Rechenmodell in der Motorsteuerung ermitteln. Vorzugsweise wird die Katalysatortemperatur jedoch real gemessen.

Gemäß einer weiteren, vorteilhaften Ausgestaltung erfolgt die Luftzuführung während und/oder nach dem Abstellen des Motors alternativ oder zusätzlich in Abhängigkeit von zum Zeitpunkt des Abstellens erfaßten Motorparametern. Dadurch läßt sich die Luftzuführung besonders gut an den tatsächlichen Motorzustand und die damit im Abgastrakt befindlichen Restemissionen anpassen.

Als ein wichtiger Parameter sei hier die Motortemperatur beispielhaft genannt.

Desweiteren kann die Luftzuführung während und/oder nach dem Abstellen des Motors auch in Abhängigkeit von bis zum Abstellen des Motors erfaßten Motorbetriebsparametern erfolgen, d. h. in Abhängigkeit von Größen, welche den vorangegangenen Fahrbetrieb beschreiben. Diese liegen üblicherweise in der Motorsteuerung vor und stehen damit für die Ansteuerung der Sekundärluftzuführung ohne weiteres zur Verfügung. Spezielle Messungen insbesondere über das Abstellen des Motors hinaus, sind dafür nicht erforderlich.

Nach einer weiteren, strömungstechnisch vorteilhaften Ausgestaltung des erfindungsgemäßen Verfahrens werden während und/oder nach dem Abstellen des Motors in einem zum Brennraum hinführenden Ansaugtrakt Kraftstoffwandanlagerungen abgedampft und mittels der Sekundärluft abgesaugt. Dadurch lassen sich insbesondere kritische HC-Emissionen reduzieren, die vor allem bei Verdunstungstests auffallen würden.

Die obengenannte Aufgabe wird weiterhin gelöst durch einen Verbrennungsmotor, insbesondere Ottomotor, mit einer Vorrichtung zur Sekundärluftzuführung in einen von einem Brennraum fortführenden Abgastrakt und mit einer Steuereinrichtung, welche derart konfiguriert ist, daß während und/oder kurz nach einem Starten des Motors mittels der Vorrichtung zur Sekundärluftzuführung zusätzliche Luft in den Abgastrakt eingeblasen wird, um dort Nachreaktionen zu begünstigen, und daß während und/oder nach einem Abstellen des Motors mittels der Vorrichtung zur Sekundärluftzuführung Luft in den Abgastrakt eingeblasen wird, um verbliebene Rückstände abzuführen. Ein solcher Motor weist die vorstehend erläuterten Vorteile auf.

Nachfolgend wird die Erfindung anhand eines Ausführungsbeispiels näher erläutert. Die zugehörige Zeichnung zeigt in:

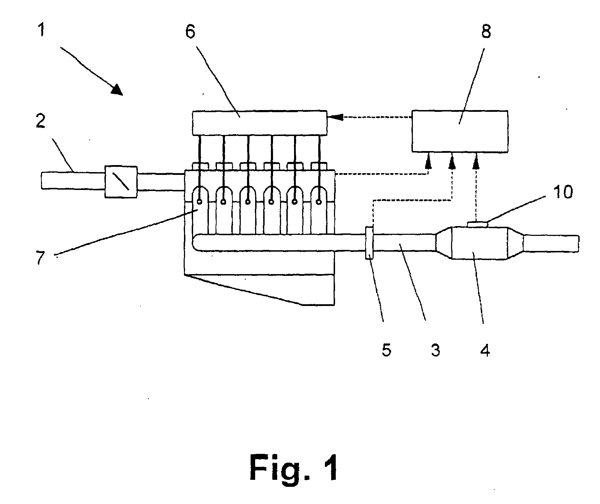

- Figur 1: eine schematische Darstellung eines Verbrennungsmotors mit Sekundärluftzuführung, der sich in erfindungsgemäßer Weise betreiben läßt.

Das Ausführungsbeispiel zeigt in Figur 1 einen Verbrennungsmotor in Form eines Ottomotors 1 mit einem zu den Brennräumen des Motors 1 leitenden Ansaugtrakt 2 und einem von diesen wegführenden Abgastrakt 3. In dem Abgastrakt 3 befindet sich ein 3-Wege-Katalysator 4 zur Verringerung der HC-, CO- und NOₓ-Anteile im Abgas sowie eine diesem vorgeschaltete Lambdasonde 5. Je nach Art und Weise des Motorbetriebs können aber auch andere Katalysatoren oder Reaktoren zum Einsatz kommen.

Weiterhin ist eine Vorrichtung 6 zur Sekundäriuftzuführung in den Abgastrakt 3 vorgesehen, welche bei einer entsprechenden Betätigung Luft in den Abgastrakt 3 einbläst. Die Einmündungen für die Sekundärluft befinden sich bevorzugt an den Abgaskrümmem 7 des Motors im Bereich der Auslaßventile, da hierdurch die thermische Energie des Abgassystems bis zum Katalysator gut ausgenutzt wird und überdies Reaktionen der zugeführten Luft mit in dem Abgastrakt 3 befindlichen Rückständen über die gesamte Länge des Abgastrakts 3 ermöglicht werden.

Über eine Steuereinrichtung 8 wird der Motor 1 in herkömmlicherweise mittels Kennfeldern und dergleichen betrieben. Die Steuemrichtung 8 übernimmt zudem die Betätigung der Vorrichtung zur Sekundärluftzuführung 6. Sie ist zu diesem Zweck derart konfiguriert, daß während und/oder kurz nach einem Starten des Motors 1 zusätzliche Luft in den Abgastrakt 3 eingeblasen wird, um dort Nachreaktionen zu ermöglichen. Bei einem gleichzeitig fetten Gemisch (λ kleiner als 1) werden so einerseits die Roh-Emissionen gering gehalten, andererseits eine schnelle Aufheizung des Katalysators 4 auf Konvertierungstemperatur erzielt. Nach der Warmlaufphase kann dann auf einen Betrieb mit λ = 1 übergegangen werden, wobei die Sekundärluftzuführung zurückgenommen oder vollständig ausgeschaltet wird.

Die Steuereinrichtung 8 ist weiterhin derart konfiguriert, daß während und/oder nach einem Abstellen des Motors mittels der Vorrichtung zur Sekundärluftzuführung 6 Luft in den Abgastrakt 3 eingeblasen wird. Dadurch lassen sich in dem Abgastrakt 3 verbliebene Rückstände, insbesondere Abgase und teilverbrannter Kraftstoff abzuführen. Mittels der zugeführten Luft werden diese über den noch heißen, konvertierungsfähigen Katalysator 4 geführt und dabei entgiftet. Bei einer ausreichenden Temperatur des Katalysators 4 wird dadurch nicht nur der Abgastrakt 3 von Rückständen befreit. Vielmehr erfolgt durch die Beaufschlagung der katalytischen Oberflächen mit Sauerstoff zusätzlich eine Regeneration des Katalysators 4, so daß dieser bei einem nächsten Betrieb schnell konvertierungsfähig wird. Bei einem erneuten Motorstart strömt folglich zunächst nur Luft aus dem Auspuff.

Das Verfahren der Luftzuführung während und/oder nach dem Abstellen des Motors kann in Abhängigkeit unterschiedlicher Parameter erfolgen.

Eine Möglichkeit besteht darin, bei einem Abstellen des Motors mindestens solange Luft in den Abgastrakt 3 einzublasen, wie sich der Katalysator 4 bei einer Konvertierungstemperatur, üblicherweise mehr als 250 Grad Celsius befindet. In dem hier dargestellten Ausführungsbeispiel wird die Temperatur des Katalysators mit einem dazu geeigneten Sensor 10 gemessen und an die Steuereinrichtung 8 übermittelt. Denkbar ist auch, den Sensor 10 als Thermoschalter auszugestalten, der unmittelbar, d. h. ohne Zwischenschaltung der Steuereinrichtung 8 mit der Vorrichtung zur Sekundärluftzuführung 6 verknüpft ist und diese bei Unterschreitung einer festgelegten Temperatur abschaltet. Das Einschalten der Vorrichtung 6 kann beispielsweise automatisch durch ein mit dem Abstellen des Motors 1 verknüpftes Signal erfolgen.

Weiterhin ist es möglich, die Luftzuführung während und/oder nach dem Abstellen des Motors in Abhängigkeit von zum Zeitpunkt des Abstellens erfaßten Motorparametern, beispielsweise der Motortemperatur vorzunehmen. Zusätzlich können in die Steuerung der Betätigung der Luftzuführung Parameter einfließen, die für den Motorbetrieb vor dem Abstellen des Motors charakteristisch sind. Auf diese Weise läßt sich gegebenenfalls auch ohne eine konkrete Temperaturmessung erkennen, wie lange und/oder wieviel Sekundärluft in den Abgastrakt zuzuführen ist.

Zusätzlich können bei einer strömungstechnisch entsprechend abgestimmten Anordnung von Einlaßkanälen für die Sekundärluft während und/oder nach dem Abstellen des Motors Kraftstoffwandanlagerungen in dem zu den Brennräumen hinführenden Ansaugtrakt 2 abgedampft, mittels der Sekundärluft abgesaugt und konvertiert werden. Dadurch können insbesondere kritische HC-Emissionen reduziert werden.

Mit dem vorstehend erläuterten Verfahren sowie einem entsprechend gestalteten Motor lassen sich Schadstoffemissionen während und in der Zeit kurz nach einem Motorstart verringern.

## Patentansprüche

1. Verfahren zum Betrieb eines Verbrennungsmotors, insbesondere Ottomotors, mit Sekundärluftzuführung in einen von einem Brennraum fortführenden Abgastrakt (3),
bei dem während und/oder kurz nach einem Starten des Motors zusätzliche Luft in den Abgastrakt (3) eingeblasen wird, um dort Nachreaktionen zu begünstigen,
**dadurch gekennzeichnet, daß**
während und/oder nach einem Abstellen des Motors (1) Luft in den Abgastrakt (3) eingeblasen wird, um verbliebene Rückstände abzuführen.

2. Verfahren zum Betrieb eines Verbrennungsmotors nach Anspruch 1, **dadurch gekennzeichnet, daß** die Luftzuführung während und/oder nach dem Abstellen des Motors (1) in Abhängigkeit der Konvertierungstemperatur eines im Abgastrakt (3) angeordneten Katalysators erfolgt.

3. Verfahren zum Betrieb eines Verbrennungsmotors nach Anspruch 2, **dadurch gekennzeichnet, daß** die Katalysatortemperatur gemessen wird.

4. Verfahren zum Betrieb eines Verbrennungsmotors nach einem der Ansprüche 1 bis 3, **dadurch gekennzeichnet, daß** die Luftzuführung während und/oder nach dem Abstellen des Motors (1) in Abhängigkeit von zum Zeitpunkt des Abstellens erfaßten Motorparametern erfolgt.

5. Verfahren zum Betrieb eines Verbrennungsmotors nach Anspruch 4, **dadurch gekennzeichnet, daß** Luftzuführung während und/oder nach dem Abstellen des Motors (1) in Abhängigkeit von der Motortemperatur erfolgt.

6. Verfahren zum Betrieb eines Verbrennungsmotors einem der Ansprüche 1 bis 5 **dadurch gekennzeichnet, daß** die Luftzuführung während und/oder nach dem Abstellen des Motors (1) in Abhängigkeit von bis zum Abstellen des Motors (1) erfaßten Motorbetriebsparametem erfolgt.

7. Verfahren zum Betrieb eines Verbrennungsmotors nach einem der Ansprüche 1 bis 6, **dadurch gekennzeichnet, daß** während und/oder nach dem Abstellen des Motors (1) in einem zum Brennraum hinführenden Ansaugtrakt (2) Kraftstoffwandanlagerungen abgedampft und mittels der Sekundärluft abgesaugt werden.

8. Verbrennungsmotor, insbesondere Ottomotor, mit einer Vorrichtung zur Sekundärluftzuführung (6) in einen von einem Brennraum fortführenden Abgastrakt (3) und mit einer Steuereinrichtung (8), welche derart konfiguriert ist, daß
während und/oder kurz nach einem Starten des Motors (1) mittels der Vorrichtung zur Sekundärluftzuführung (6) zusätzliche Luft in den Abgastrakt (3) eingeblasen wird, um dort Nachreaktionen zu begünstigen,
**dadurch gekennzeichnet, daß**
während und/oder nach einem Abstellen des Motors (1) mittels der Vorrichtung zur Sekundärluftzuführung (6) Luft in den Abgastrakt (3) eingeblasen wird, um verbliebene Rückstände abzuführen.
